# EUROPEAN PATENT APPLICATION

(11) **EP 2 835 724 A1**
(43) Date of publication of application: **11.02.2015**
(21) Application number: 13851158.9
(22) Date of filing: 24.10.2013
(51) Int. Cl.: G06F 3/041

(54) **CONTROL METHOD AND INPUT DEVICE OF TOUCHSCREEN TERMINAL**

(30) Priority: 30.10.2012 CN 201210422927
(71) Applicant: Huawei Device Co., Ltd., Longgang District Shenzhen Guangdong 518129 (CN)
(72) Inventor: TAN, Qian, Shenzhen Guangdong 518129 (CN)
(74) Representative: Pfenning, Meinig & Partner GbR
(86) International application number: PCT/CN2013/085907
(87) International publication number: WO 2014/067419

(57) **Abstract**

This application provides a control method, and an input device of a touch screen terminal. In this application, a first touch signal that is input, on a touch screen, by a user by using at least one physical key is received, where the at least one physical key is fixed in a specified area on the touch screen; a second touch signal corresponding to the first touch signal is obtained according to a preset correspondence between the first touch signal and the second touch signal, so that control information can be generated according to the second touch signal, and a control operation is performed. Because the physical key is fixed on the touch screen, the physical key protrudes from the touch screen; thereby it is easy for the user to sense the physical key. Therefore, the problem in the prior art that the user is prone to tap a wrong key because input on a soft keyboard is difficult to be sensed by the user can be avoided, thereby improving input reliability.

## Description

This application claims priority to Chinese Patent Application No. CN 201210422927.5, filed with the Chinese Patent Office on October 30, 2012 and entitled "CONTROL METHOD, AND INPUT DEVICE OF TOUCH SCREEN TERMINAL", which is incorporated herein by reference in its entirety.

### TECHNICAL FIELD

This application relates to communications technologies, and in particular, to a control method, and an input device of a touch screen terminal.

### BACKGROUND

With the development of science and technology, more and more touch screen terminals, such as a mobile phone, a digital photo frame, and a tablet computer, are brought into people's daily life. In daily application, a user interaction manner that is most commonly used for a touch screen terminal is that a user inputs information or an instruction by using a soft keyboard displayed on the touch screen, to instruct the touchscreen terminal to perform a control operation on the input information or instruction.

However, when some application programs, such as a game program, run on the touchscreen terminal, the user is prone to tap a wrong key because input on the soft keyboard is difficult to be sensed by the user, which reduces input reliability.

### SUMMARY

A plurality of aspects of this application provides a control method, and an input device of a touch screen terminal, which are used to improve input reliability.

According to one aspect of this application, a control method is provided, and includes:
receiving a first touch signal that is input, on a touch screen, by a user by using at least one physical key, where the at least one physical key is fixed in a specified area on the touchscreen;
obtaining, according to a preset correspondence between the first touch signal and a second touch signal, the second touch signal corresponding to the first touch signal; and
generating control information according to the second touch signal, to perform a control operation.

According to the foregoing aspect and any possible implementation manner, an implementation manner is further provided, where the at least one physical key includes one key or a combination of several keys of the following keys:
a direction key;
a cancel key;
an input key;
a select key; and
an option setting key.

According to the foregoing aspect and any possible implementation manner, an implementation manner is further provided, where the at least one physical key is made of a conductive material.

According to the foregoing aspect and any possible implementation manner, an implementation manner is further provided, where a medium connecting all physical keys in the at least one physical key is made of an insulation material.

According to the foregoing aspect and any possible implementation manner, an implementation manner is further provided, where the medium connecting all the physical keys in the at least one physical key is made of a transparent material.

According to the foregoing aspect and any possible implementation manner, an implementation manner is further provided, where the medium connecting all the physical keys in the at least one physical key forms a ring shape.

According to another aspect of this application, an input device of a touch screen terminal is provided, where the touch screen terminal includes a processor and a touch screen; the input device includes at least one physical key, where the at least one physical key is fixed in a specified area on the touch screen, and is configured to input a first touch signal on the touch screen according to a touch of a user, so that the touch screen terminal obtains, according to a preset correspondence between the first touch signal and a second touch signal, the second touch signal corresponding to the first touch signal; and generates control information according to the second touch signal, to perform a control operation.

According to the foregoing aspect and any possible implementation manner, an implementation manner is further provided, where the at least one physical key includes one key or a combination of several keys of the following keys:
a direction key;
a delete key;
an input key;
a select key; and
an option setting key.

According to the foregoing aspect and any possible implementation manner, an implementation manner is further provided, where the at least one physical key is made of a conductive material.

According to the foregoing aspect and any possible implementation manner, an implementation manner is further provided, where a medium connecting all physical keys in the at least one physical key is made of an insulation material.

According to the foregoing aspect and any possible implementation manner, an implementation manner is further provided, where the medium connecting all the physical keys in the at least one physical key is made of a transparent material.

According to the foregoing aspect and any possible implementation manner, an implementation manner is further provided, where the medium connecting all the physical keys in the at least one physical key forms a ring shape.

It can be known from the foregoing technical solutions that, in embodiments of this application, a first touch signal that is input, on a touch screen, by a user by using at least one physical key is received, where the at least one physical key is fixed in a specified area on the touch screen; and a second touch signal corresponding to the first touch signal is obtained according to a preset correspondence between the first touch signal and the second touch signal, so that control information can be generated according to the second touch signal, and a control operation is performed. Because the physical key is fixed on the touch screen, the physical key protrudes from the touch screen; thereby it is easy for the user to sense the physical key. Therefore, the problem in the prior art that the user is prone to tap a wrong key because input on a soft keyboard is difficult to be sensed by the user can be avoided, thereby improving input reliability.

### BRIEF DESCRIPTION OF DRAWINGS

To describe the technical solutions in the embodiments of this application or in the prior art more clearly, the following briefly introduces the accompanying drawings required for describing the embodiments or the prior art. Apparently, the accompanying drawings in the following description show some embodiments of this application, and persons of ordinary skill in the art may still derive other drawings from these accompanying drawings without creative efforts.
FIG. 1 is a schematic flowchart of a control method according to an embodiment of this application;
FIG. 2 is a schematic structural diagram of a physical key in the embodiment corresponding to FIG. 1; and
FIG. 3 is a schematic structural diagram of an input device of a touch screen terminal according to another embodiment of this application.

### DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are merely a part rather than all of the embodiments of this application. All other embodiments obtained by persons of ordinary skill in the art based on the embodiments of this application without creative efforts shall fall within the protection scope of this application.

In addition, the term "and/or" in this specification merely describes an association relationship between associated objects, and indicates that three relationships may exist. For example, A and/or B may indicate three situations: A exists separately, both A and B exist, and B exists separately. Besides, the symbol "/" in this specification generally indicates that associated objects before and after the symbol are in an "or" relationship.

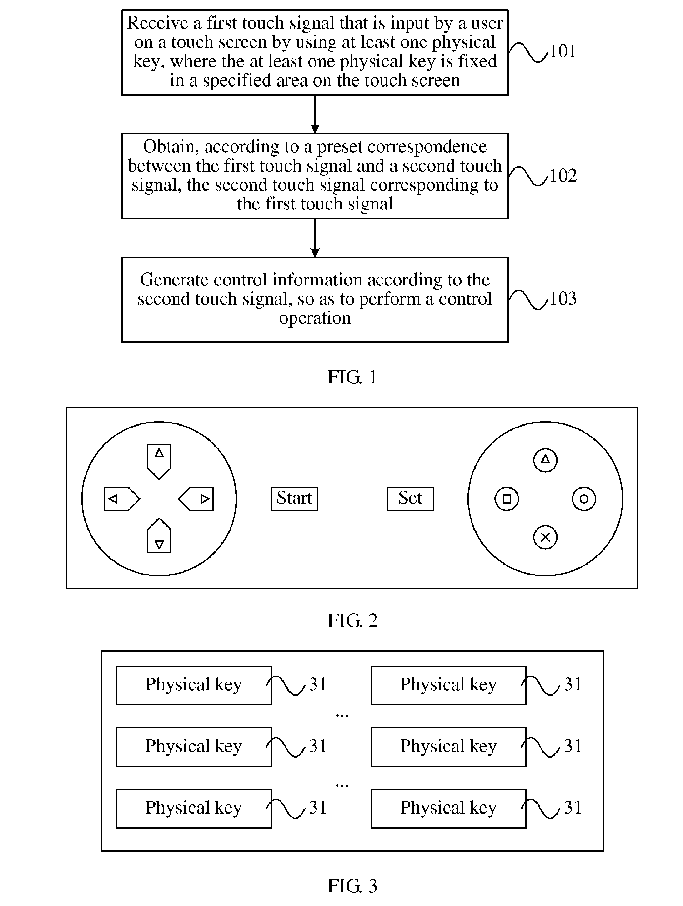

FIG. 1 is a schematic flowchart of a control method according to an embodiment of this application, as shown in FIG. 1.

101: Receive a first touch signal that is input, on a touch screen, by a user by using at least one physical key, where the at least one physical key is fixed in a specified area on the touch screen.

102: Obtain, according to a preset correspondence between the first touch signal and a second touch signal, the second touch signal corresponding to the first touch signal.

103: Generate control information according to the second touch signal, to perform a control operation.

Optionally, in a possible implementation manner of this embodiment, the at least one physical key may be fixed in the specified area on the touch screen by means of adsorption, pasting, or snapping, which is not limited in this embodiment.

Optionally, in a possible implementation manner of this embodiment, the at least one physical key may include but is not limited to one key or a combination of several keys of the following keys:
a direction key;
a delete key;
an input key;
a select key; and
an option setting key.

Optionally, in a possible implementation manner of this embodiment, the at least one physical key is made of a conductive material.

Optionally, in a possible implementation manner of this embodiment, a medium connecting all physical keys in the at least one physical key is made of an insulation material.

Optionally, in a possible implementation manner of this embodiment, the medium connecting all the physical keys in the at least one physical key is made of a transparent material, thereby not affecting a display effect of an application program running on a touch screen terminal.

Optionally, in a possible implementation manner of this embodiment, the medium connecting all the physical keys in the at least one physical key forms a ring shape, so as to be annularly sleeved on the middle-to-lower part of the touch screen that is in landscape mode, thereby effectively ensuring that the at least one physical key is fixed tightly.

To make the method provided in the embodiment of this application clearer, a control operation in a third-party application game is used as an example in the following. The at least one physical key may be shown in FIG. 2. The medium connecting all the physical keys is made of a transparent insulation material, for example, transparent plastic.

In this embodiment, a first touch signal that is input, on a touch screen, by a user by using at least one physical key is received, where the at least one physical key is fixed in a specified area on the touch screen; and a second touch signal corresponding to the first touch signal is obtained according to a preset correspondence between the first touch signal and the second touch signal, so that control information can be generated according to the second touch signal, and a control operation is performed. Because the physical key is fixed on the touch screen, the physical key protrudes from the touch screen; thereby it is easy for the user to sense the physical key. Therefore, the problem in the prior art that the user is prone to tap a wrong key because input on a soft keyboard is difficult to be sensed by the user can be avoided, thereby improving input reliability.

It should be noted that, the foregoing method embodiment is expressed as a series of action combinations for the purpose of brief description, but persons skilled in the art should know that this application is not limited to the described action sequence, because some steps may be performed in another sequence or simultaneously according to this application. Besides, persons skilled in the art should also know that the embodiment described in this specification is an exemplary embodiment, and the involved actions and modules are not mandatory in this application.

In the foregoing embodiments, description of each embodiment has its emphasis. For a part in an embodiment that is not described in detail, reference may be made to a related part in another embodiment.

FIG. 3 is a schematic structural diagram of an input device of a touch screen terminal according to another embodiment of this application, as shown in FIG. 3. The touch screen terminal in this embodiment may include a processor and a touch screen, and the input device of the touch screen terminal may include at least one physical key 31. The at least one physical key 31 is fixed in a specified area on the touch screen, and is configured to input a first touch signal on the touch screen according to a touch of a user, so that the touch screen terminal obtains, according to a preset correspondence between the first touch signal and a second touch signal, the second touch signal corresponding to the first touch signal; and generates control information according to the second touch signal, to perform a control operation.

Optionally, in a possible implementation manner of this embodiment, the at least one physical key may be fixed in the specified area on the touch screen by means of adsorption, pasting, or snapping, which is not limited in this embodiment.

Optionally, in a possible implementation manner of this embodiment, the at least one physical key 31 may include but is not limited to one key or a combination of several keys of the following keys:
a direction key;
a delete key;
an input key;
a select key; and
an option setting key.

Optionally, in a possible implementation manner of this embodiment, the at least one physical key 31 is made of a conductive material.

Optionally, in a possible implementation manner of this embodiment, a medium connecting all physical keys 31 in the at least one physical key 31 is made of an insulation material.

Optionally, in a possible implementation manner of this embodiment, the medium connecting all the physical keys 31 in the at least one physical key 31 is made of a transparent material, thereby not affecting a display effect of an application program running on the touch screen terminal.

Optionally, in a possible implementation manner of this embodiment, the medium connecting all the physical keys 31 in the at least one physical key forms a ring shape, so as to be annularly sleeved on the middle-to-lower part of the touch screen that is in landscape mode, thereby effectively ensuring that the at least one physical key 31 is fixed tightly.

In this embodiment, a first touch signal is input, according to a touch of a user on a touch screen, by using at least one physical key, where the at least one physical key is fixed in a specified area on the touch screen of a touch screen terminal, so that the touch screen terminal obtains, according to a preset correspondence between the first touch signal and a second touch signal, the second touch signal corresponding to the first touch signal; and the touch screen terminal can generate control information according to the second touch signal, and a control operation is performed. Because the physical key is fixed on the touch screen, the physical key protrudes from the touch screen; thereby it is easy for the user to sense the physical key. Therefore, the problem in the prior art that the user is prone to tap a wrong key because input on a soft keyboard is difficult to be sensed by the user can be avoided, thereby improving input reliability.

It may be clearly understood by persons skilled in the art that, for the purpose of convenient and brief description, for a detailed working process of the foregoing system, apparatus, and unit, reference may be made to a corresponding process in the foregoing method embodiment, and details are not described herein again.

In the several embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, which may be located in one position, or may be distributed on a plurality of network units. A part or all of the units may be selected according to actual needs to achieve the objectives of the solutions in the embodiments.

In addition, functional units in the embodiments of this application may be integrated into one processing unit, or each of the units may exist alone physically, or two or more units are integrated into one unit. The integrated unit may be implemented in the form of hardware, or may be implemented in the form of hardware combining a software functional unit.

The foregoing integrated unit implemented in the form of a software functional unit may be stored in a computer-readable storage medium. The foregoing software functional unit is stored in a storage medium, and includes a plurality of instructions used to enable a computer device (which may be a personal computer, a server, a network device, or the like) or a processor (processor) to execute a part of steps of the method described in the embodiments of this application. The storage medium includes: any medium that can store program code, such as a USB flash disk, a removable hard disk, a read-only memory (Read-Only Memory, ROM), a random access memory (Random Access Memory, RAM), a magnetic disk, or an optical disc.

Finally, it should be noted that the foregoing embodiments are merely intended for describing the technical solutions in this application rather than limiting this application. Although this application is described in detail with reference to the foregoing embodiments, persons of ordinary skill in the art should understand that they may still make modifications to the technical solutions described in the foregoing embodiments or make equivalent replacements to some technical features thereof, as long as such modifications or replacements do not cause the essence of corresponding technical solutions to depart from the spirit and scope of the technical solutions in the embodiments of this application.

## Claims

1. A control method, comprising:
receiving a first touch signal that is input, on a touch screen, by a user by using at least one physical key, wherein the at least one physical key is fixed in a specified area on the touch screen;
obtaining, according to a preset correspondence between the first touch signal and a second touch signal, the second touch signal corresponding to the first touch signal; and
generating control information according to the second touch signal, to perform a control operation.

2. The method according to claim 1, wherein the at least one physical key comprises one key or a combination of several keys of the following keys:
a direction key;
a delete key;
an input key;
a select key; and
an option setting key.

3. The method according to claim 1 or 2, wherein the at least one physical key is made of a conductive material.

4. The method according to any one of claims 1 to 3, wherein a medium connecting all physical keys in the at least one physical key is made of an insulation material.

5. The method according to any one of claims 1 to 4, wherein the medium connecting all the physical keys in the at least one physical key is made of a transparent material.

6. The method according to any one of claims 1 to 5, wherein the medium connecting all the physical keys in the at least one physical key forms a ring shape.

7. An input device of a touch screen terminal, wherein the touch screen terminal comprises a processor and a touch screen; the input device comprises at least one physical key, wherein the at least one physical key is fixed in a specified area on the touch screen, and is configured to input a first touch signal on the touch screen according to a touch of a user, so that the touch screen terminal obtains, according to a preset correspondence between the first touch signal and a second touch signal, the second touch signal corresponding to the first touch signal; and generates control information according to the second touch signal, to perform a control operation.

8. The device according to claim 7, wherein the at least one physical key comprises one key or a combination of several keys of the following keys:
a direction key;
a delete key;
an input key;
a select key; and
an option setting key.

9. The device according to claim 7 or 8, wherein the at least one physical key is made of a conductive material.

10. The device according to any one of claims 7 to 9, wherein a medium connecting all physical keys in the at least one physical key is made of an insulation material.

11. The device according to any one of claims 7 to 10, wherein the medium connecting all the physical keys in the at least one physical key is made of a transparent material.

12. The device according to any one of claims 7 to 11, wherein the medium connecting all the physical keys in the at least one physical key forms a ring shape.
